# EUROPEAN PATENT APPLICATION

(11) **EP 4 465 149 A1**
(43) Date of publication of application: **20.11.2024**
(21) Application number: 23315200.8
(22) Date of filing: 16.05.2023
(51) Int. Cl.: G06F 1/24, G06F 13/24, G06F 13/42

(54) **A METHOD FOR INDICATING TO A READER OF AN EMBEDDED SECURE ELEMENT THAT THE EMBEDDED SECURE ELEMENT HAS DATA TO BE TRANSMITTED TO THE READER THROUGH A SPI BUS, CORRESPONDING EMBEDDED SECURE ELEMENT AND READER**

(71) Applicant: THALES DIS FRANCE SAS, 92190 Meudon (FR)
(72) Inventor: Mathian, Nicolas, 13400 AUBAGNE (FR); Wanner, Thibault, 13005 MARSEILLE (FR); Despres, Jean Michel, 13190 ALLAUCH (FR); Fazaz, Sabri, 13400 AUBAGNE (FR); Tartiere, Pascal, 13600 LA CIOTAT (FR)
(74) Representative: Scheer, Luc

(57) **Abstract**

The present invention concerns a method for indicating to a reader (10) of an embedded secure element (11) that the embedded secure element (11) has data to be transmitted to the reader (10) through a SPI bus, Serial Peripheral Interface, the reader (10) and the embedded secure element (11) being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus,
the method comprising sending from the embedded secure element (11) to the reader (10) on the SPI RST line a signal for indicating that the embedded secure element (11) has data to transmit to the reader (10), in order that the reader (10) fetches data stored in the embedded secure element (11).

## Description

The present invention concerns telecommunications and more particularly the communication between a secure element and a reader of this secure element, the secure element and the reader being comprised in a device.

The secure element according to the invention is an embedded secure element (eSE), this meaning that the secure element cannot be extracted from the device, like a smart card (Sim card) for example could be. The secure element is typically an eUICC (embedded UICC, UICC standing for Universal Integrated Circuit Card).

It is known that a secure element reader can be connected through a SPI interface to this secure element in order to exchange data. Such an SPI interface is for example described in GlobalPlatform Technology - APDU Transport over SPI/I2C, version 1.0 January 2020.

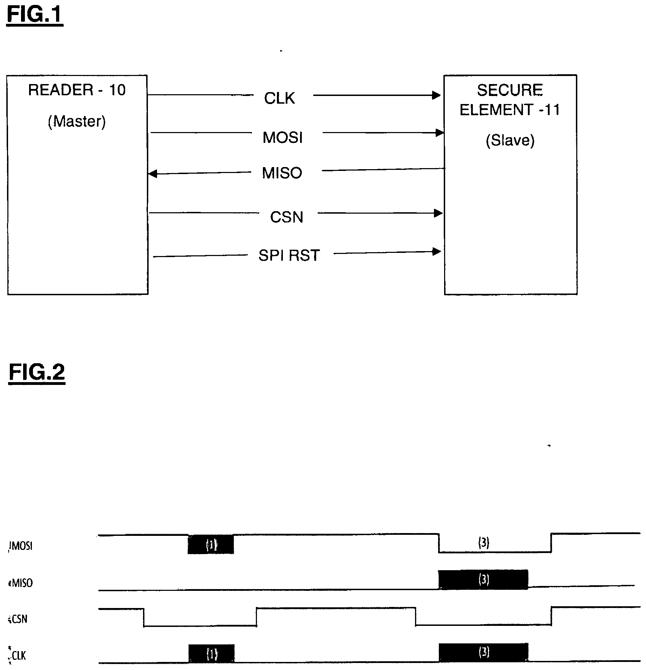

A SPI interface (or bus) is represented in figure 1.

in this figure, two entities are represented: A reader 10 and a secure element 11. The reader 10 has the role of the master and the secure element 11 is the slave. There can be a plurality of slaves (not necessarily consisting in secure elements). The reader 10 and the secure element 11 are comprised in a device. The device is for example an loT device (Internet of Things), a smartphone, a connected tablet or a PDA, Personal Digital Assistant,...

The SPI bus comprises four standardized logic lines:
- a CLK line - Serial Clock (generated by the master 10);
- a MOSI line - SPI data input, MOSI standing for Master Output, Slave input (generated by the master 10);
- a MISO line - SPI data output, MISO standing for Master Input, Slave Output (generated by the slave 11);
- a CSN line - SPI Chip select, that is active when low (digital level 0 in opposite to digital level 1).

The fact to limit the SPI bus to four wires impacts however the reliability of the communication: The SPI Master 10 is obliged to send a polling byte to the slave 11 to detect if an answer from the slave 11 is available and must be fetched by the master 10.

From the slave side, this polling (arriving each millisecond) is asynchronous of the process, and may interrupt any operation, and could be the root cause of many issues, in particular on the multi-interface-products.

In the state of the art, two additional lines can be foreseen: A SPI RST line (Reset) and a IRQ line (Interruption Request). The functions of these two lines are:
For the SPI RST line:
- output for the master, input for the slave;
- the master must put'1' on the SPI RST wire when it wants to communicate on the SPI interface;
- the master must apply a level at '0' the SPI RST wire when it wants to reset the interface (after detecting a problem for example);
- the slave must reset the communication interface when it detects a falling edge on the SPI RST wire (change from '1' to '0');
- the slave must authorize communication on the interface only if the SPI RST wire is at '1'.

For the IRQ line:
- input for the master, output for the slave;
- the slave must apply a level on the IRQ wire (which is visible compared to the normal level of the line) when it wants to indicate to the master that data must be fetched;
- the master must trigger data recovery when it detects an edge or plateau on the IRQ line.

Regarding the standardized four wires of a SPI bus (CLK, MOSI, MISO and CSN), on latest chips developed by some chips manufacturers, it has been decided to add a fifth line managed by the SPI Master 10 as a SPI Reset pin. This reset line is represented in figure 1 and is noted SPI RST. The aim of this pin (on the chip) is to have a hardware solution to reset the SPI communication and to recover from any dead loop caused by any issue. The SPI RST line is managed by the master 10 as indicated before.

But even with this fifth wire, pollings from SPI master 10 are still mandatory, and may be the root cause of issues exactly as it is the case with four wires.

Moreover, on specific secure elements, polling bytes are stored in a SPI-dedicated-FIFO of the slave 11. If the OS of the slave 11 is not able to empty regularly the FIFO, it could lead to a FIFO overflow that will result in a mute secure element 11 on the interface.

The polling mechanism is also totally asynchronous of the OS process and could occur at random points even when it is not wanted, in particular when the SPI master is handling the FIFO (or SPI buffer) leading to a data corruption.

Finally, the polling mechanism is regularly and continuously interrupting and then slowing down the main process.

The present invention proposes a solution to these problems.

More precisely, the invention proposes to keep the SPI Reset line and function while removing the need of the polling mechanism from the master 10.

These objectives and others that will appear later on are obtained, according to the invention, thanks to a method for indicating to a reader of an embedded secure element that the embedded secure element has data to be transmitted to the reader through a SPI bus, the reader and the embedded secure element being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus,
the method comprising sending from the embedded secure element to the reader on the SPI RST line a signal for indicating that the embedded secure element has data to transmit to the reader, in order that the reader fetches data stored in the embedded secure element.

Preferably, the embedded secure element is an eUICC.

Advantageously, the device is one of:
- an loT device;
- a smartphone;
- a connected tablet;
- a PDA.

The invention also concerns an embedded secure element for communicating through a SPI bus with a reader, the reader and the embedded secure element being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus,
the embedded secure element being configured for sending to the reader on the SPI RST line a signal for indicating that the embedded secure element has data to transmit to the reader, in order that the reader fetches data stored in the embedded secure element.

The invention also concerns a reader communicating with an embedded secure element through a SPI bus, the reader and the embedded secure element being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus,
the reader being configured for receiving from the embedded secure element on the SPI RST line a signal for indicating that the embedded secure element has to transmit data to the reader, in order that the reader fetches data stored in the embedded secure element.

Other features and advantages of the invention will appear in the following description of the accompanying figures that represent:
- Figure 1 a standardized SPI bus where an extra Reset link is added to this standard SPI bus;
- Figure 2, an example chronogram of an SPI communication with the extra SPI RST link used as in the invention.

Figure 1 has been described in regard of the state of the art.

Figure 2 represents a schematical chronogram of SPI bus and extra SPI RST link during a communication between the reader and the embedded secure element.

The purpose of the invention is to merge on a same physical wire or line the Reset (RST) and Interrupt Request (IRQ) functions, without obligating the master to send polling bytes to the slave to detect if data are available and must be fetched.

To this end, the invention proposes the solution described thereafter.

The problem of reliability on SPI interface is solved by the following solution:
It is proposed to share the management of the SPI Reset pin between the SPI Master 10 and the SPI Slave 11:
- the main feature of the Reset line is still managed by the SPI Master 10;
- the SPI Slave 11 is able to use this SPI Reset line as a SPI IRQ to warn the master 10 that an answer (data) is ready to be fetched.

This management is done by using the GPIO (General Purpose Input/Output) capabilities of the master 10.

More precisely, the invention concerns a method for indicating to the reader 10 of the embedded secure element 11 that the embedded secure element 11 has data to be transmitted to the reader 10 through the SPI bus, the reader 10 and the embedded secure element 11 being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus, this method comprising sending from the embedded secure element 11 to the reader 10 on the SPI RST line a signal for indicating that the embedded secure element 11 has data to transmit to the reader 10, in order that the reader 10 fetches data stored in the embedded secure element 11.

In order to achieve that, the following steps are carried out:
At step (0), the SPI reset line is driven high by the reader 10 to activate the SPI interface of the secure element 11.

At step (1), the master 10 sends data to the slave 11 and activates the clock signal therefore. At step (2), the master 10 puts the SPI Reset line in open drain (level 0) to configure it in input. The slave 11 puts the SPI Reset line also in open drain to drive the signal SPI Reset line in output. The master 10 is then alerted that the slave 11 has data to be fetched by applying a high level on the SPI RST line.

At step (3), the rising edge on the SPI RST line triggers the master 10 to fetch the available data.

The invention also concerns an embedded secure element 11 for communicating through a SPI bus with a reader 10, the reader 10 and the embedded secure element 11 being comprised in a device, the SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of the SPI bus but adding a hardware way to reset the SPI bus,
the embedded secure element 11 being configured for sending to the reader 10 on the SPI RST line a signal for indicating that it has data to transmit to the reader 10, in order that the reader 10 fetches data stored in the embedded secure element 11.

Finally, the invention concerns a reader 10 communicating with an embedded secure element 11 through a SPI bus, the reader 10 and the embedded secure element 11 being comprised in a device, the SPI bus comprising:
- a CSN line, Chip/slave select;
- a CLK line, Serial Clock;
- a MOSI line, Master Out Slave In;
- a MISO line, Master in Slave Out;
- a SPI RST line, Reset, not directly part of the SPI bus but adding a hardware way to reset the SPI bus,
the reader 10 being configured for receiving from the embedded secure element 11 on the SPI RST line a signal for indicating that the embedded secure element 11 has to transmit data to the reader 10, in order that the reader 10 fetches data stored in the embedded secure element 11.

The advantages of the invention are:
- increased reliability: The process on the MOSI line is no more interrupted by regular pollings from master and the SPI master ability to reset the SPI interface with the SPI Reset line is kept;
- the secure element 11 is less stressed in term of interrupts/events management (no more polling);
- the operations of the reader 10 are reduced, if several slaves are managed in parallel;
- there is also a reduced current consumption by the reader 10 as there are no more sending of polling bytes and only waiting signal from the SPI slave(s);
- the communication speed and performances are improved: The secure element 11 warns the reader 10 as soon as data are available and the reader 10 can fetch them immediately instead of being synchronized on a polling byte;
- the usage and benefits of the SPI Reset Line is optimized.

## Claims

1. A method for indicating to a reader (10) of an embedded secure element (11) that said embedded secure element (11) has data to be transmitted to said reader (10) through a SPI bus, Serial Peripheral Interface, said reader (10) and said embedded secure element (11) being comprised in a device, said SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of said SPI bus but adding a hardware way to reset said SPI bus,
wherein said method comprises sending from said embedded secure element (11) to said reader (10) on said SPI RST line a signal for indicating that said embedded secure element (11) has data to transmit to said reader (10), in order that said reader (10) fetches data stored in said embedded secure element (11).

2. A method according to claim 1, wherein said embedded secure element (11) is an eUICC, embedded UICC.

3. A method according to any of the claims 1 or 2, wherein said device is one of:
- an loT, Internet of Things, device;
- a smartphone;
- a connected tablet;
- a PDA, Personal Digital Assistant.

4. An embedded secure element (11) for communicating through a SPI bus with a reader (10), said reader (10) and said embedded secure element (11) being comprised in a device, said SPI bus comprising:
- a CSN line, Chip/slave select;
- a CLK line, Serial Clock;
- a MOSI line, Master Out Slave In;
- a MISO line, Master in Slave Out;
- a SPI RST line, Reset, not directly part of said SPI bus but adding a hardware way to reset said SPI bus,
said embedded secure element (11) being configured for sending to said reader (10) on said SPI RST line a signal for indicating that said embedded secure element (11) has data to transmit to said reader (10), in order that said reader (10) fetches data stored in said embedded secure element (11).

5. An embedded secure element (11) according to claim 4, wherein said embedded secure element (11) is an eUICC, embedded UICC.

6. A reader (10) communicating with an embedded secure element (11) through a SPI bus, Serial Peripheral Interface, said reader (10) and said embedded secure element (11) being comprised in a device, said SPI bus comprising:
- a CSN line, Chip/slave select;
- a CLK line, Serial Clock;
- a MOSI line, Master Out Slave In;
- a MISO line, Master In Slave Out;
- a SPI RST line, Reset, not directly part of said SPI bus but adding a hardware way to reset said SPI bus,
said reader (10) being configured for receiving from said embedded secure element (11) on said SPI RST line a signal for indicating that said embedded secure element (11) has to transmit data to said reader (10), in order that said reader (10) fetches data stored in said embedded secure element (11).
